(19) Europäisches Patentamt
European Patent Office
Office européen des brevets

(11) **EP 3 913 572 A1**

(12) **EUROPEAN PATENT APPLICATION**

(43) Date of publication:
**24.11.2021 Bulletin 2021/47**

(51) Int Cl.:
**G06T 5/00** (2006.01)   **G06T 5/10** (2006.01)

(21) Application number: **20175876.0**

(22) Date of filing: **21.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **The Provost, Fellows, Scholars and
other
Members of Board of Trinity College Dublin
Dublin 2 (IE)**

(72) Inventors:
• **Smolic, Aljosa
  Dublin 9, (IE)**
• **Yadav, Ojasvi
  Dublin 1, (IE)**
• **Ghosal, Koustav
  Stillorgan,, Co. Dublin, (IE)**
• **Lutz, Sebastian
  Dublin 7, (IE)**

(74) Representative: **Purdylucey Intellectual Property
6-7 Harcourt Terrace
D02 FH73 Dublin 2 (IE)**

(54) **LOSS FUNCTION FOR IMAGE RECONSTRUCTION**

(57) The invention provides a neural network training method for training a neural network to perform a translation on image data, wherein the translation corrects the image data; one or more loss function(s) between two images are used for training a neural network to perform the translation; and the one or more loss function(s) comprises a frequency loss function. The present application is directed towards the training of a neural network using a loss function calculated in the frequency space, i.e. a frequency loss function. The frequency loss function can preferably be combined with the traditional L1 loss function used for image correction.

FIG. 1

**Description**

**Field**

The present disclosure is directed towards the field of image processing.

**Background**

Since the dawn of photography, there has been a constant drive to improve image quality. This has been addressed in both hardware and software. For example, modern digital cameras (e.g. DSLRs) are equipped with advanced hardware capable of handling such scenarios such as large aperture sizes, slow shutter speeds, sensitive sensors etc. Normally, a better or rather a more expensive digital camera has a higher range of these exposure settings and is thus capable of taking better quality pictures in harsh lighting conditions. Additionally, in DSLRs images are stored in minimally processed RAW format (typically 12-13 bits) that allows capturing a wide range of intensity values and correcting them later using a photo editing tool (e.g. Adobe Photoshop™), as appropriate.

Manual image correction using professional post processing software such as Adobe Photoshop™, Lightroom™, PhotoScape™ etc, can give creditable results but they are expensive and require user interaction (i.e. they are not automatic) and user expertise. Moreover, such software is not free or open source. As a result, a typical user of a mobile computing devices is therefore unable to use this type of software.

A further problem is that image capture technologies are moving away from solely hardware based techniques to more software orientated solutions. In recent years, interest in mobile photography has increased significantly due to the rise in popularity of mobile computing devices (e.g. smartphones) and the rise in popularity of social networking sites such as Instagram™, Flickr™, Snapseed™ etc. Both casual hobbyists and professional photographers upload millions of images daily to these websites. Compared to DSLRs, mobile computing devices are easier to operate and ideal for capturing quick, candid shots. Moreover, the quality of images shot using mobile phones has improved significantly, to be almost on par with DSLRs today.

However, unlike DSLRs, mobile computing devices are constrained by the growing consumer demand for slimmer hardware and memory efficient image formats (e.g. JPEG). There is no appetite to provide a mobile computing device with the hardware of e.g. a DSLR because of the negative impact this would have on the cost and the size of a mobile computing device. Due to this, photographs taken in low-light scenarios using a mobile computing device tend to be blurry and noisy. In order to compensate for the lack of complex hardware and the RAW image format, mobile phones usually rely on post-processing software. The use of post-processing software with mobile computing devices to obtain correctly exposed images is particularly attractive because e.g. the hardware required for this software approach (i.e. a CPU and RAM capable of running complex software efficiently) is nowadays provided as standard with even an entry-level smartphone.

A typical software solution to the problem of exposure correction is a multiple exposure approach - i.e. taking multiple pictures using different exposure settings and fusing them to recreate a corrected image. However, this technique is slow. Additionally, the quality of the images obtained used this technique are sensitive to camera movement, making it difficult for a user to obtain an image of acceptable quality.

Therefore, automatic image correction (for example exposure correction) for images remains an active area in computer vision. At present, the two main approaches to image correction can be classified as either classical approaches or deep learning approaches.

Classical approaches typically work in the frequency domain and involve estimating the statistics of the noise in the image signal and subsequently rectify it for the desired result. For example, the paper by Stephen Pizer et al. entitled "Adaptive histogram equalization and its variations" and the paper by Shih-Chia Huang, et al. entitled "Efficient contrast enhancement using adaptive gamma correction with weighting distribution" both discuss classical approaches to exposure correction.

Deep learning approaches utilise neural network. For example, the paper by Chen Chen et al. entitled "Learning to see in the dark," and the paper by Yuen Peng Loh et al. entitled "Getting to know low-light images with the exclusively dark dataset," and the paper by Wenhan Yang et al. entitled "Deep retinex decomposition for low-light enhancement" discus more recent neural network approaches to exposure correction. Exposure correction, i.e. adjusting the light conditions of an image, is required because low light conditions during image capture may result in dark, noisy and blurry pictures.

In addition, there is now an abundance of easily available big-data. This has led to the research and development of data-driven software for post-processing and improving the quality of the photos. In fact, such software is now central to tackling the image quality - hardware trade off.

However, both the classical and neural network approaches are based on assumptions regarding the image being corrected. In the case of the classical approaches, assumptions are made regarding the content of the image which can then be used to correct the image. In the case of e.g. Chen et al., neural network is trained on RAW images captured using a DSLR under constrained environments - as a result the neural network is biased towards these images. Thus, neither of these approaches is suited to the correction of images captured by a mobile computing device such as a mobile phone.

It is therefore an object of the present disclosure to improve image quality through providing an improved technique for the reconstruction of captured image data to correct for one or more types of image data errors (e.g. exposure correction, deblurring, denoising, super-resolution).

**Summary**

According to the present invention there is provided, as set out in the appended claims, a neural network training method for training a neural network to perform a translation on image data, wherein:

the translation corrects the image data;
one or more loss function(s) between two images are used for training a neural network to perform the translation; and
the one or more loss function(s) comprises a frequency loss function.

In one embodiment the frequency loss function is a loss function which is calculated based on image data which has been converted into the frequency domain with a frequency transform.

In one embodiment the method comprises computing the frequency loss function between two images at a plurality of scales and summing the results to obtain a final frequency loss function.

In one embodiment the frequency loss function between two images $I_1$ and $I_2$ both images having dimensions of M by N is calculated as:

$$L_{FreqTx}^{\frac{M}{K} \times \frac{N}{K}} = \frac{K^2}{M \times N} |FreqTx(I_1) - FreqTx(I_2)|^{\frac{M}{K} \times \frac{N}{K}}$$

where K is a scaling factor, FreqTx is a frequency transform.

In one embodiment the final frequency loss function is calculated as:

$$Final\ Frequency\ Loss\ Function(I_1, I_2) = L_{FreqTx}^{\frac{M}{1} \times \frac{N}{1}} + L_{FreqTx}^{\frac{M}{2} \times \frac{N}{2}} + L_{FreqTx}^{\frac{M}{4} \times \frac{N}{4}}$$

In one embodiment the frequency transform is a Fast Fourier Transform, FFT.

In one embodiment the frequency transform is a Discrete Cosine Transform, DCT.

In one embodiment the frequency loss function is used in conjunction with an L1 loss function.

In one embodiment the image data is in RAW format.

In one embodiment the frequency loss function is used in conjunction with a GAN loss function.

In one embodiment the image data is in JPEG format.

In one embodiment the translation is performed on underexposed images to correct for underexposure.

In another embodiment there is provided a neural network training system for training a neural network to perform a translation on image data, wherein the translation corrects the image data, and the system comprises:
a means for calculating one or more loss function(s) between two images, wherein the one or more loss function(s) are used for training the neural network to perform the translation, wherein:
the one or more loss function(s) comprises a frequency loss function.

There is also provided a computer program comprising program instructions for causing a computer program to carry out the above method which may be embodied on a record medium, carrier signal or read-only memory.

**Brief Description of the Drawings**

The invention will be more clearly understood from the following description of an embodiment thereof, given by way of example only, with reference to the accompanying drawings, in which:-

Figure 1 is a block diagram of a system in accordance with the present disclosure;
Figure 2 is a comparison of results obtained from a RAW image file using a prior art method and methods in accordance with the present application;

Figure 3 is a comparison of results obtained from a JPEG image file using a prior art method and methods in accordance with the present application; and

Figure 4 is a bar chart of the just-objectionable-difference (JOD) between L1, FFT, and DCT loss.

## Detailed Description of the Drawings

The present disclosure is directed towards a simple yet effective approach for correcting the exposure of in the wild photographs under harsh lighting conditions. In particular, the present invention stems from the observation that in a properly exposed image, the low frequencies dominate or contribute to most of the relevant content and in an underexposed image has a different frequency content, with on average higher frequencies present. This led to the insight that the frequencies of an underexposed image follow a unique pattern due to the presence of noise. Thus, the present application is directed towards the training of a neural network using a loss function calculated in the frequency space, i.e. a frequency loss function. The frequency loss function can preferably be combined with the traditional L1 loss function used for image correction. In one exemplary application, the frequency loss function can be used to train a neural network framework to perform exposure correction.

The frequency loss function is differentiable and hence the framework is end-to-end trainable using backpropagation. Furthermore, frequency loss function is preferably a framework-independent and e.g. works with both for RAW and JPEG images and performs significantly better than prior art solution. The use of a frequency loss function is efficiently able to handle noisy and underexposed JPEG images and produce properly exposed good quality outputs. Moreover, it is generic and works also for RAW image format and can be plugged in to other known frameworks for exposure correction with no additional overhead.

This can be demonstrated by the provision of improved results for exposure correction of RAW images from the 'See In The Dark (SID)' dataset mentioned in the paper by Chen Chen et al. entitled "Learning to see in the dark,"

Thus, the present application provides a method and a system able to take a single, underexposed and noisy image (e.g. a JPEG image) and correct it with little or no user intervention, in real time.

The problem of exposure correction can be modelled as an image translation problem i.e. the translation of a under exposed image to a correctly exposed image. One approach to this translation is to use a neural network to determine an optimal translation. The optimal mapping is learnt from underexposed to properly exposed domain. Typically, image translation systems are trained using L1 loss functions and/or Adversarial Networks - for example Pix2Pix (as discussed in the paper by Phillip Isola et al. entitled "Imageto-image translation with conditional adversarial networks") or Cycle GAN (as discussed in the paper by Jun-Yan Zhu et al. entitled "Unpaired image-to-image translation using cycle-consistent adversarial networks"). The L1 loss function is used to minimize the error in the translation. The L1 loss function is defined as the sum, for a set of n images, of all the absolute differences between the true values of the data for a correctly exposed image and the predicted values obtained by preforming a translation on the data for an underexposed image - i.e:

$$L1 = \sum_{i=1}^{n} \left| y_{true} - y_{predicted} \right|$$

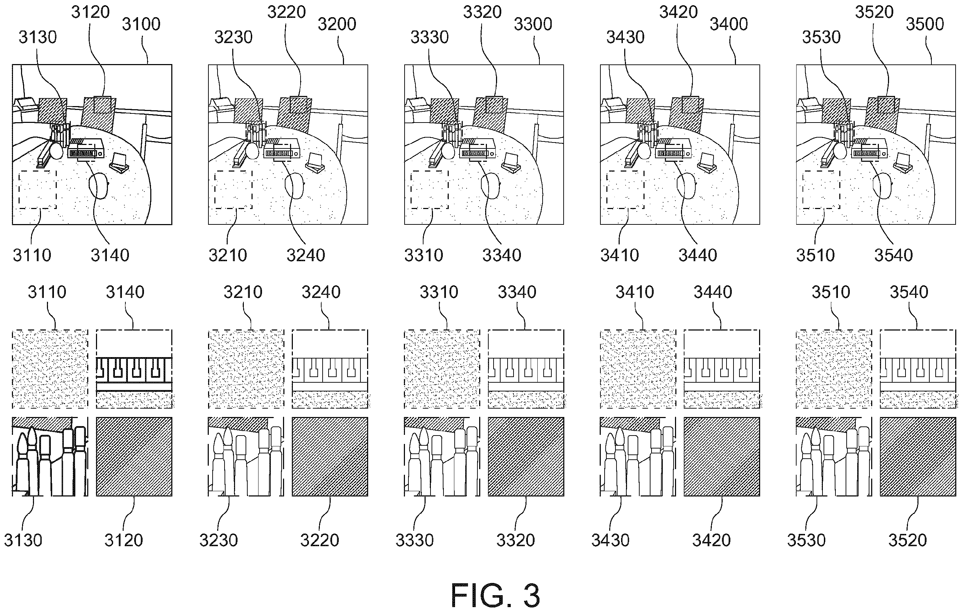

The networks learn how best to map the current domain (e.g. low light image, sketch etc.) to a new corrected domain (e.g. corrected image, painting etc.) and also to reconstruct or fill in the missing information. As shown in figure 3, where image 3100 is an underexposed image and image 3500 is a correctly exposed version of the same image, image 3200 has been obtained using a GAN translation trained with an L1 loss function on under exposed image 3100. As can be seen e.g. by comparing portion 3110 of image 3100 with portion 3210 of image 3200, such prior art mapping using often results in the amplification of noise and other artefacts present in the original domain.

According to the present disclosure, to improve this translation, image data is translated into the frequency domain before the frequency loss factor is calculated. As a non-limiting example, such a loss function can be based on a discrete cosine transformation (DCT) or a fast fourier transformation (FFT). For example, one example of a DCT-based frequency loss function between images $I_1$ and $I_2$ of dimensions M $\times$ N is defined as follows:

$$(1) \; L_{DCT}^{\frac{M}{K} \times \frac{N}{K}} = \frac{K^2}{M \times N} |DCT(I_1) - DCT(I_2)|^{\frac{M}{K} \times \frac{N}{K}}$$

where K is a scaling factor and DCT(I) refers to the discrete cosine transform of image I. The DCT is preferably a two-dimensional type-II DCT.

Preferably, the frequency loss function is applied a plurality of times at a number of different resolutions. For example, applying this loss at different resolutions of the images with a DCT loss function gives:

$$(2)\ DCT_{Final}(I_1, I_2) = L_{DCT}^{\frac{M}{1} \times \frac{N}{1}} + L_{DCT}^{\frac{M}{2} \times \frac{N}{2}} + L_{DCT}^{\frac{M}{4} \times \frac{N}{4}}$$

Similarly, we can also define $FFT_{Final}(I_1, I_2)$. Essentially during training, the frequency loss function (e.g. DCT or the FFT) of ground truth (i.e. a correctly exposed image) and predictions (i.e. a translation derived from an underexposed version of the correctly exposed image) are computed and the mean of absolute difference between the two is then calculated. This process is preferably repeated plurality of times (e.g. again over two further lower resolutions). The FFT is preferably a two-dimensional Cooley-Tukey FFT algorithm.

Essentially, the proposed frequency loss function explicitly guides the network to learn the true frequency components of the correctly exposed image distribution and to ignore the noisy frequencies of the poorly exposed inputs. This has several advantages. First, it is differentiable and thus suitable for training a neural network in an end-to-end fashion using backpropagation. Secondly, it is generic and can be added to existing systems without additional overhead. Thirdly, by computing the frequency loss function at different resolutions, the network sees artefacts at different scales and thus learns a scale-agnostic representation. This is a desirable feature for the processing of real-life images obtained by the image sensor of a portable electronic device such as a mobile phone.

Preferably, a frequency loss function is combined with the traditional L1 loss function and adversarial losses to produce a system that translates well-exposed and less noisy outputs through reducing noise, blur and other impurities such as color artefacts, etc.

The system can be used on two different categories of images: (a) Exposure correction of RAW images; (b) Exposure correction of a compressed images (e.g. JPEG images).

In prior art systems, such as those discussed in the above referenced paper by Chen et al., a basic encoder-decoder framework has an input packed into 4 channels and spatial resolution is reduced by a factor of 2 in each dimension. The black level is subtracted and the data is scaled by an amplification ratio. The packed and amplified data is fed into a fully convolutional network. In practice, the user of a mobile device such as a camera phone captures images in a compressed format, such as e.g. JPEG.

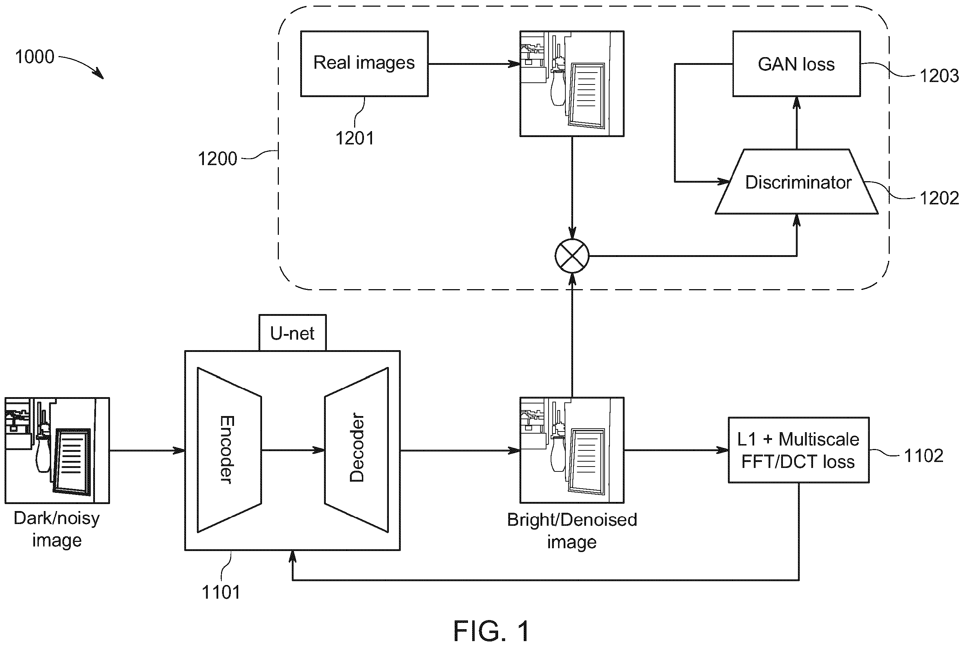

Figure 1 shows a system in accordance with the present disclosure. The system comprises a standard encoder / decoder architecture 1101 coupled with a GAN component 1200. The system is based on Pix2Pix framework used for compressed images (e.g. JPEG images), which is a popular framework for paired image-translation problems. The Pix2Pix model follows a U-Net architecture which is trained with L1 and adversarial losses. The model of the present disclosure roughly follows this pipeline however a frequency loss function is also included to in the loss functions 1102. For RAW images, the system does not need the inclusion of the GAN component 1200. The output is a 12-channel image with half the spatial resolution. This half-sized output is processed by a sub-pixel layer to recover the original resolution.

*RAW image exposure correction*

A number of experiments were performed on RAW image exposure correction, using the SID dataset. This dataset consists of indoor and outdoor images of various scenes. For every scene that was shot, one picture was taken with a low shutter speed and another with a high shutter speed. By nature of photography, the image with low shutter speed had low illumination and is also quite noisy. The same image shot with high shutter speed, however, was properly illuminated which resulted in a much clearer and noiseless image. The SID dataset consists of 1865 RAW images that were used for training and 599 images that were used for testing.

During the training process, random crops of 512x512 pixels were taken from the images for data augmentation. Additionally, these random crops are also randomly flipped and rotated.

For testing, the whole full resolution images were processed. The model was trained three times, once using only the L1 loss function, twice with the L1 loss and a frequency loss function (once with a FFT loss function and once with a DCT loss function). The models were trained from scratch using the default settings, i.e. using the Adam optimizer and amplification ratio set as the exposure difference between input and ground truth. The learning rate starts from 10-4 for epochs 0 to 2000, after which it becomes 10-5 for the next 2000 epochs. The models were trained for a total of 4000 epochs. Table 1 below sets out the results for RAW exposure correction experiments for both peak signal-to-noise ratio (PSNR) and structural similarity SSIM where higher scores are better.

Table 1

| Loss Function | PSNR | SSIM |
|---|---|---|
| L1 | 31.93 | 0.767 |
| L1 + DCT | 31.93 | 0.769 |
| L1 + FFT | 32.07 | 0.776 |

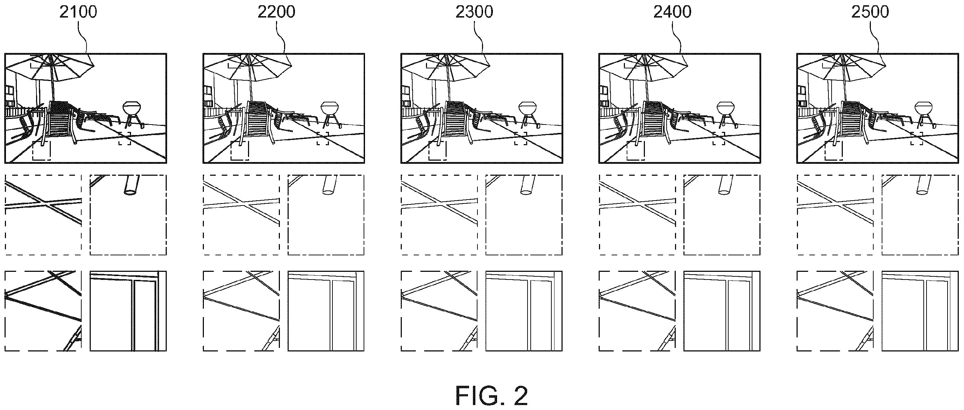

As can be seen, with all parameters otherwise the same, the performance of the network can be improved just including a frequency loss function e.g. by adding any variant of the frequency loss function to the total loss function of the network. It can also be seen that the FFT variant of the frequency loss function performs significantly better than the prior art L1 implementation. Qualitative results for this experiment can be seen in figure 2, where image 2100 is an underexposed version of correctly exposed image 2500 and image 2200 has been obtained by translating image 2100 using a translation trained with an L1 loss function, image 2300 has been obtained by translating image 2100 using a translation trained with an L1 loss function and a DCT loss function and image 2400 has been obtained by translating image 2100 using a translation trained with an L1 loss function and a FFT loss function. These results show that a frequency loss function, in particular the FFT variant, reduces distortion artefacts and increases image sharpness.

As can be further noted, a frequency loss function reduces the noise in the corrected images and leads to smoother edges and more accurate colours.

*JPEG image exposure correction*

JPEG image correction was selected as an example of a the correction of a compressed image without the need for decompression. The model was trained used the same images for training and testing as were used for training on RAW images from the SID dataset, with the SID images converted from RAW to JPEG using XnConvert™ at default settings. The default pix2pix parameters were used and all models were trained for 200 epochs in total. Similar to the RAW exposure correction, one model was trained with the L1 loss and adversarial (GAN) loss functions as a baseline. Two more models were trained with L1 loss, adversarial loss (GAN) and frequency loss functions (in one model the frequency loss function is a FFT loss function and in the other mode the frequency loss function is a DCT loss function). The models were trained from scratch with a learning rate of 2e-4 for 100 epochs, which then linearly decay to 0 over the next 100 epochs. Table 2 below sets out the results for our JPEG exposure correction experiments for both PSNR and SSIM, where higher scores are better.

Table 2

| Loss function | PSNR | SSIM |
|---|---|---|
| L1 + GAN | 23.9487 | 0.7623 |
| L1 + GAN + DCT | 24.6305 | 0.7816 |
| L1 + GAN + FFT | 24.4624 | 0.7727 |

As with the previous experiment, adding a frequency loss function to the total loss function for the neural network increases its performance in both the PSNR and SSIM. As opposed to the RAW case, however, for the JPEG images the DCT variant performs better.

Further qualitative results are shown in figure 3, where image 3100 is an underexposed version of correctly exposed image 3500 and image 3200 has been obtained by translating image 3100 using a translation trained with an L1 and GAN loss function, image 3300 has been obtained by translating image 3100 using a translation trained with an L1 and GAN loss function combined with a DCT loss function and image 3400 has been obtained by translating image 3100 using a translation trained with an L1 and GAN loss function combined with a FFT loss function. As can be seen, the same increases in image quality using a frequency loss function were obtained in the RAW case. The sharpness of the images is increased and noisy artefacts are reduced at the same time.

To provide some qualitative analysis of our loss function, a subjective study was conducted on 20 participants. During the study the participants were told to choose one image that they find more appealing, given two images to choose from. Possible characteristics of the images like noise, blur and discoloration were pointed out to each participant at the start of the session during a small training session.

At every choice, the participant was shown an image taken from the test dataset that had been processed by a network trained with either the L1-loss, DCT loss variant or FFT loss variant and the same image processed by a network trained with either one of the other loss functions. During the subjective test we mixed results from both the RAW exposure correction and the JPEG exposure correction. However, the participants were only shown the same image, processed by the same network architecture at one time. Only the type of loss function used to train the network differed in the choices the participant was shown. In total, each participant saw 40 unique images. Due to the pairwise comparison, the participants were shown 120 images in total.

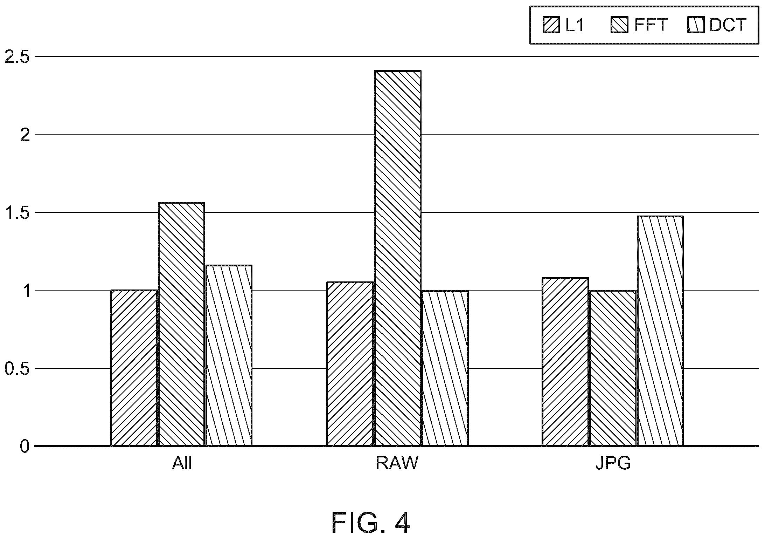

To analyse the results of the subjective test, we used pairwise comparison scaling. The results of this analysis is shown in figure 4. As can be seen, compared to the L1 loss, both the DCT and the FFT variants were chosen significantly more often by our test subjects over all images. Additionally, the FFT variant was chosen significantly more often than the DCT. For only the RAW images, the FFT variant was chosen significantly more often than the others, with only minor differences in L1 and DCT. For the JPEG images, the DCT variant was the one chosen significantly more often. These results match the results of our quantitative results.

As such, a frequency loss function, which transforms the image output into the frequency domain, is far more able to capture differences in high frequency regions. This leads to an increase in sharpness and a reduction of noise and other artefacts in our results as shown in our quantitative and qualitative results and leads to significantly better results in image quality.

Such a frequency loss function can also be used in other computer vision tasks.

A person skilled in the art will note that although a type-II DCT and FFT have been discussed as examples, other frequency transforms could potentially be used, e.g: a discrete Fourier Transform (DFT); types I, III, IV, V-VIII DCTs; variants of the FFT; etc.

In addition, although the specific examples above discussed the translation of an underexposed image to a image corrected for underexposure, a person skilled in the art will note that the method disclosed herein has wider applications and may be used to correct for other types of distortion - e.g. over exposure, motion blurring, perspective distortion, lens correction, etc.

It will be appreciated that the invention employing the frequency loss function outperforms the default loss function qualitatively and quantitatively. The frequency loss function also be employed in image enhancement methods to get improved results, for example Super-Resolution, Denoising, Deblurring and Image-Inpainting applications.

To do this, a number of models from can be trained to generate models for Super-Resolution, Denoising, Deblurring and Image-Inpainting. Datasets used in the training are available from 34. C. Dong, C. C. Loy, K. He, and X. Tang, \Image super-resolution using deep convolutional networks," CoRR, vol. abs/1501.00092, 2015; J. Lehtinen, J. Munkberg, J. Hasselgren, S. Laine, T. Karras, M. Aittala, and T. Aila, \Noise2noise: Learning image restoration without clean data," CoRR, vol. abs/1803.04189, 2018; O. Kupyn, T. Martyniuk, J. Wu, and Z. Wang, \Deblurgan-v2: Deblurring (orders-of-magnitude) faster and better," in 2019 IEEE/CVF International Conference on Computer Vision (ICCV), pp. 8877{8886, 2019; and C. Xie, S. Liu, C. Li, M.-M. Cheng, W. Zuo, X. Liu, S. Wen, and E. Ding, \Image inpainting with learnable bidirectional attention maps," 2019.

The frequency loss function can be added to each model and retrained them from scratch again, keeping the same default settings and using the same datasets. Based on the retaining and incorporation of the frequency loss function, the FFT-loss is superior than DCT-loss due to a larger variance of frequency coefficients All the respective training parameters, respective model structures, respective datasets were kept the same and the only difference was the additional frequency loss function. Hence the improvement after adding the frequency loss function in all the image enhancement tasks improves the accuracy of various image enhancement applications.

It will be appreciated that in the context of the present invention the image data can pertain to video data, where each image data can be obtained from a plurality of images constituting a video, the operation of which can be fully embodied with respect to the above description and appended claims.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1. A neural network training method for training a neural network to perform a translation on image data, wherein:

   the translation corrects the image data;
   one or more loss function(s) between two images are used for training a neural network to perform the translation; and
   the one or more loss function(s) comprises a frequency loss function.

2. The method of claim 1, wherein the frequency loss function is a loss function which is calculated based on image data which has been converted into the frequency domain with a frequency transform.

3. The method of any preceding claim, wherein the method comprises computing the frequency loss function between two images at a plurality of scales and summing the results to obtain a final frequency loss function.

4. The method of claim 2 or 3 wherein the frequency loss function between two images $I_1$ and $I_2$ both images having dimensions of M by N is calculated as:

$$L_{FreqTx}^{\frac{M}{K} \times \frac{N}{K}} = \frac{K^2}{M \times N} |FreqTx(I_1) - FreqTx(I_2)|^{\frac{M}{K} \times \frac{N}{K}}$$

   where K is a scaling factor, FreqTx is a frequency transform.

5. The method of claim 4 when dependent upon claim 3, wherein the final frequency loss function is calculated as:

$$Final\ Frequency\ Loss\ Function(I_1, I_2) = L_{FreqTx}^{\frac{M}{1} \times \frac{N}{1}} + L_{FreqTx}^{\frac{M}{2} \times \frac{N}{2}} + L_{FreqTx}^{\frac{M}{4} \times \frac{N}{4}}$$

6. The method of any one of claims 2 - 5, wherein the frequency transform is a Fast Fourier Transform, FFT.

7. The method of any one of claims 2 - 5, wherein the frequency transform is a Discrete Cosine Transform, DCT.

8. The method of any preceding claim, wherein the frequency loss function is used in conjunction with an L1 loss function.

9. The method of claim 8, wherein the image data is in RAW format.

10. The method of claim 8, wherein the frequency loss function is used in conjunction with a GAN loss function.

11. The method of claim 10, wherein the image data is in JPEG format.

12. The method of any preceding claim, wherein the translation is performed on underexposed images to correct for underexposure.

13. A neural network training system for training a neural network to perform a translation on image data, wherein the translation corrects the image data, and the system comprises:
    a means for calculating one or more loss function(s) between two images, wherein the one or more loss function(s) are used for training the neural network to perform the translation, wherein:
    the one or more loss function(s) comprises a frequency loss function.

14. A computer readable storage medium storing instructions, which when executed by a computer cause the computer to perform a method according to anyone of claims 1 - 12.

FIG. 1

2500

2400

2300

2200

2100

FIG. 2

FIG. 3

FIG. 4

Europäisches
Patentamt

European
Patent Office

Office européen
des brevets

# EUROPEAN SEARCH REPORT

Application Number

EP 20 17 5876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN ZAILIANG ET AL: "DN-GAN: Denoising generative adversarial networks for speckle noise reduction in optical coherence tomography images", BIOMEDICAL SIGNAL PROCESSING AND CONTROL, ELSEVIER, AMSTERDAM, NL, vol. 55, 29 August 2019 (2019-08-29), XP085914438, ISSN: 1746-8094, DOI: 10.1016/J.BSPC.2019.101632 [retrieved on 2019-08-29] | 1,8,10, 13,14 | INV. G06T5/00 G06T5/10 |
| A | * abstract * * page 2, left-hand column, line 32 - right-hand column, line 10 * * page 3, right-hand column, line 12 - page 4, right-hand column, line 22 * ----- | 2-7,9, 11,12 | |
| A | US 2020/092453 A1 (GORDON KEVIN [CA] ET AL) 19 March 2020 (2020-03-19) * abstract; figures 1-8 * * paragraph [0007] - paragraph [0012] * * paragraph [0022] - paragraph [0065] * ----- | 1-14 | |
| A | JAAKKO LEHTINEN ET AL: "Noise2Noise: Learning Image Restoration without Clean Data", ARXIV.ORG, CORNELL UNIVERSITY LIBRARY, 201 OLIN LIBRARY CORNELL UNIVERSITY ITHACA, NY 14853, 12 March 2018 (2018-03-12), XP081420766, * the whole document * ----- | 1-14 | TECHNICAL FIELDS SEARCHED (IPC) G06T G06N |
| A | CN 110 519 595 A (UNIV ZHEJIANG) 29 November 2019 (2019-11-29) * the whole document * ----- | 1-14 | |
| A | CN 109 903 237 A (UNIV FUDAN) 18 June 2019 (2019-06-18) * the whole document * ----- | 1-14 | |

The present search report has been drawn up for all claims

| Place of search | Date of completion of the search | Examiner |
|---|---|---|
| Munich | 6 November 2020 | Herter, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 5876

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2020

| Patent document cited in search report | Publication date | Patent family member(s) | Publication date |
|---|---|---|---|
| US 2020092453 A1 | 19-03-2020 | US 2020092453 A1<br>WO 2020053837 A1 | 19-03-2020<br>19-03-2020 |
| CN 110519595 A | 29-11-2019 | NONE | |
| CN 109903237 A | 18-06-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEPHEN PIZER et al.** *Adaptive histogram equalization and its variations*
- **SHIH-CHIA HUANG et al.** *Efficient contrast enhancement using adaptive gamma correction with weighting distribution*
- **CHEN CHEN et al.** *Learning to see in the dark*
- **YUEN PENG LOH et al.** *Getting to know low-light images with the exclusively dark dataset*
- **WENHAN YANG et al.** *Deep retinex decomposition for low-light enhancement*
- **PHILLIP ISOLA et al.** *Imageto-image translation with conditional adversarial networks*
- **JUN-YAN ZHU et al.** *Unpaired image-to-image translation using cycle-consistent adversarial networks*

- **C. DONG ; C. C. LOY ; K. HE ; X. TANG.** Image super-resolution using deep convolutional networks. *CoRR,* 2015
- **J. LEHTINEN ; J. MUNKBERG ; J. HASSELGREN ; S. LAINE ; T. KARRAS ; M. AITTALA ; T. AILA.** \Noise2noise: Learning image restoration without clean data. *CoRR,* 2018
- **O. KUPYN ; T. MARTYNIUK ; J. WU ; Z. WANG.** Deblurgan-v2: Deblurring (orders-of-magnitude) faster and better. *2019 IEEE/CVF International Conference on Computer Vision (ICCV),* 2019, 8877-8886
- **C. XIE ; S. LIU ; C. LI ; M.-M. CHENG ; W. ZUO ; X. LIU ; S. WEN ; E. DING.** *Image inpainting with learnable bidirectional attention maps,* 2019